# EUROPÄISCHE PATENTANMELDUNG

(11) **EP 2 662 632 A1**
(43) Veröffentlichungstag der Anmeldung: **13.11.2013**
(21) Anmeldenummer: 12401095.0
(22) Anmeldetag: 11.05.2012
(51) Int. Cl.: F24C 7/08, G06F 9/22

(54) **Bedienvorrichtung für ein Haushaltgerät**

(71) Anmelder: Miele & Cie. KG, 33332 Gütersloh (DE)
(72) Erfinder: Hasenpusch, Christoph, 33332 Gütersloh (DE); Keisker, Jennifer, 33607 Bielefeld (DE); Laukötter, Ina, 33330 Gütersloh (DE); Löckmann, Manuela, 33415 Verl (DE); Nöller, Horst, 33332 Gütersloh (DE); Wibberg, Peter, 33379 Rietberg (DE)

(57) **Zusammenfassung**

Die Erfindung betrifft eine Bedienvorrichtung (1) für ein Haushaltgerät (4), die eine als Berührschirm (6) ausgebildete Blende (3) umfasst, mit einem Display (7) und einem transparenten Sensorfeld (10), das in Wirkverbindung mit einem Mikrocontroller (9) steht zur Bestimmung einer Berührposition oder einer Berührbewegung auf der Blende (3) bzw. auf dem Berührschirm (6), wobei der Mikrocontroller (9) dazu eingerichtet ist, Betriebsarten, Programme und/oder Parameter als Schaltfläche (11,13T, 13F, 13Z) zur Auswahl durch Berührung der dargestellten Schaltfläche (11,13T, 13F, 13Z) anzuzeigen und die Anzeige zur Auswahl der Betriebsart oder von Parametern bereitzustellen zum Konfigurieren des Programmes im Haushaltgerät (4).

Um eine einfache und übersichtliche Bedienvorrichtung für ein Haushaltgerät einer Vielzahl von komplexen Einstellmöglichkeiten bereitzustellen, ist der Mikrocontroller (9) ferner dazu eingerichtet, zur Präsentation von einzustellenden Parametern oder Betriebsarten eine Ausgabe von mehr als einem Parameter oder Betriebsart zur Einstellung bzw. Auswahl gleichzeitig auf dem Display (7) bereitzustellen, wobei die Manipulation oder Einstellung des jeweiligen Parameters oder Betriebsart keiner vorgegebenen Reihenfolge unterworfen ist.

## Beschreibung

Die Erfindung betrifft eine Bedienvorrichtung für ein Haushaltgerät, die eine als Berührschirm ausgebildete Blende umfasst, mit einem Display und einem transparenten Sensorfeld, das in Wirkverbindung mit einem Mikrocontroller steht zur Bestimmung einer Berührposition oder einer Berührbewegung auf der Blende bzw. auf dem Berührschirm, wobei der Mikrocontroller dazu eingerichtet ist, Betriebsarten, Programme und/oder Parameter als Schaltfläche zur Auswahl durch Berührung der dargestellten Schaltfläche anzuzeigen und die Anzeige zur Auswahl der Betriebsart oder von Parametern bereitzustellen zum Konfigurieren des Programmes im Haushaltgerät.

In Haushaltgeräten ist es bekannt, Bedienvorrichtungen zum Konfigurieren oder zur Auswahl eines Programms zu verwenden, die eine Displaysteuerung mit Touch-Display umfassen. Diese hat den Vorteil, dass Piktogramme oder Textanzeigen immer genau dort erfolgen, wo sich dann jeweils die Berührposition zur Aktivierung befindet. Aus der DE 10 2009 011 678 A1 ist eine entsprechende Bedienvorrichtung für eine Waschmaschine bekannt. Aus der DE 10 2009 006 224 A1 ist eine entsprechende Bedienvorrichtung für ein Gargerät bekannt. Hierbei muss der Benutzer aus einer Vielzahl von dargestellten Symbolen einzelne Symbole durch eine Verschiebebewegung einer Berührposition in einen vorgegeben Bereich verschieben, um auf diese Art ein Garprogramm zu kreieren oder konfigurieren. Nachteilig ist hierbei, dass aufgrund der Vielzahl von individuellen Möglichkeiten der Programmzusammenstellung für den normalen Anwender im Haushalt unübersichtlich werden kann. Durch diese Darbietung der Möglichkeiten können sich schnell Fehlprogrammierungen oder Fehlbedienungen einstellen.

Der Erfindung liegt somit die Aufgabe zu Grunde, eine einfache und übersichtliche Bedienvorrichtung für ein Haushaltgerät einer Vielzahl von komplexen Einstellmöglichkeiten bereitzustellen.

Erfindungsgemäß wird diese Aufgabe unter anderem durch eine Bedienvorrichtung mit den Merkmalen des unabhängigen Anspruchs 1, einem Haushaltgerät gemäß Anspruch 11 und einem Gargerät gemäß Anspruch 12 gelöst. Vorteilhafte Ausgestaltungen und Weiterbildungen der Erfindung ergeben sich aus den jeweils nachfolgenden abhängigen Ansprüchen.

Die mit der Erfindung erreichbaren Vorteile bestehen neben Vielzahl von möglichen Einstellungen und auswählbaren Programmen darin, dass eine gute Übersichtlichkeit für die Einstell- und Auswahlmöglichkeiten zum Konfigurieren eines Programms geschaffen wird. Als Programm ist hierbei allgemein ein Steuerungsprogramm zur Durchführung eines Behandlungsprozesse in einem Haushaltgerät gemeint. Bei einem Gargerät bedeutet dies, dass als Programm ein Ablauf gemeint ist, den ein Mikrocontroller einer Steuereinrichtung für einen Garprozess durchführen muss. Die erfindungsgemäße Lösung zeichnet sich dadurch aus, dass der Mikrocontroller ferner dazu eingerichtet ist, zur Präsentation von einzustellenden Parametern oder Betriebsarten eine Ausgabe von mehr als einem Parameter oder Betriebsart zur Einstellung bzw. Auswahl gleichzeitig auf dem Display bereitzustellen, wobei die Manipulation oder Einstellung des jeweiligen Parameters oder Betriebsart keiner vorgegebenen Reihenfolge unterworfen ist. Die Betriebsart, das Programm und/oder die Parameter können hierbei durch Berührung, punktuell oder durch eine Wischbewegung, auf der jeweiligen Schaltfläche ausgewählt werden. Der Benutzer kann somit aus einer begrenzten Anzahl von veränderbaren Parametern diejenigen aussuchen, die er gegenüber einer Initialeinstellung verändern muss. Somit kann an einem Gargerät oder Backofen beispielsweise zuerst die Temperatur, danach die Zeit und am Ende der Feuchtegrad des Garraums eingestellt werden, je nachdem, welche Werte zum Garen des zu garenden Gargutes erforderlich sind. Ferner wird aufgrund der übersichtlichen Anzahl von angebotenen Betriebsarten jeweils eine vordefinierte Parametereinstellung vorgenommen, die für die jeweilige Betriebsart einen sinnvollen Referenzwert darstellt.

In einer vorteilhaften Ausführung ist der Mikrocontroller dazu eingerichtet, die Anzeige der Betriebsarten, Programme und/oder Parameter als Schaltfläche zur Auswahl durch Berührung sequentiell zur Auswahl der Betriebsart oder eines Parameters bereitzustellen, wobei die Übernahme der eingestellten Parameter durch Weiterschalten der sequentiellen Auswahl auf die nächste einzustellende Betriebsart erfolgt. Damit wird zumindest für eine Teilmenge an Einstellmöglichkeiten eine Menüführung bereitgestellt, wodurch Fehlbedienungen vermieden werden.

In einer vorteilhaften Weiterbildung ist das konfigurierte Ablaufprogramm als individuelles Programm abspeicherbar und wieder aufrufbar. Damit kann ein einmal konfiguriertes Programm, beispielsweise ein Programm für einen Garprozess zu optimalen Garen eines bestimmten Gerichts, zu einem späteren Zeitpunkt wiederholt aufgerufen werden. Der Benutzer muss dann über die Einstellungen nicht mehr erneut nachdenken, wenn er das gleich Gericht noch einmal im Haushaltgerät, hier ein Gargerät, garen lassen will.

In einer zweckmäßigen Ausführung ist der Mikrocontroller dazu eingerichtet, das individuelle Programm vor Beginn der Auswahl und Einstellung der Betriebsarten und Parameter als separate Schaltfläche bereitzustellen. Dadurch wird sichergestellt, dass der Benutzer mittels dieser Auswahl bewusst vor der Konfigurierung seines individuellen Programms sein individuelles Programm kreiert und separat abspeichert. Vorab fest vordefinierte Programme, die sogenannten Werksprogramme, werden in dieser Ausführung nicht nach einer Veränderung überschrieben und bleiben dauerhaft erhalten.

In einer weiteren, vorteilhaften Ausführung ist der Mikrocontroller dazu eingerichtet, ein bereits im Speicher vordefiniertes Automatikprogramm hinsichtlich seiner Betriebsarten und Parameter auf dem Display anzuzeigen derart, dass die Betriebsarten und/oder Parameter durch Bedienhandlungen verändert und abgespeichert werden können. Somit sind auf einfache Weise individuelle Anpassungen an den vorgegebenen Programmen möglich, wobei der Benutzer auf bereits vorgegeben Werte zurückgreifen kann und durch kleine Veränderungen der einzelnen Werte für einzelne Parameter die veränderten Resultate besser vorhersehen kann. Dem Benutzer wird die individuelle Programmerstellung sehr einfach dargeboten, obwohl bei jeder Betriebsartauswahl oder Parametereinstellung jeweils komplizierte Prozesse beinhalten.

In einer zweckmäßigen Weiterbildung ist der Mikrocontroller dazu eingerichtet, das ursprüngliche vordefinierte Automatikprogramm nach der Veränderung zu überschreiben. Somit kann das Haushaltgerät individuell auf die Benutzergewohnheiten angepasst werden, ohne die Anzahl von auswählbaren Programmen zu erhöhen.

In einer anderen, zweckmäßigen Weiterbildung ist der Mikrocontroller dazu eingerichtet, das ursprüngliche vordefinierte Automatikprogramm nach der Veränderung unter einem neuen Namen abzuspeichern. Somit kann der Benutzer beliebige, zusätzliche Programme selbst kreieren, ohne die vordefinierten Werksprogramme zu verlieren.

In einer insgesamt zweckmäßigen Ausführung ist der Mikrocontroller dazu eingerichtet, die Werte für einen Parameter oder verschiedene, auswählbare Betriebsarten als animierte Walzen auf dem Display darzustellen, die durch eine überstreichende Berührung in Richtung quer zur virtuellen Rotationsachse der Walze die Werte in der Form einer walzenförmigen Rotationsbewegung verändert. Hierbei ist es möglich, mehrere animierte Walzen für jeweils einen Parameter nebeneinander auf dem Display darzustellen, die wahlfrei hinsichtlich ihrer Werte durch eine jeweils überstreichende Bewegung auf die die Walze anzeigende Schaltfläche entsprechend eingestellt werden können.

In einer weiteren, insgesamt zweckmäßigen Ausführung ist der Mikrocontroller dazu eingerichtet, weitere, auswählbare Betriebsarten oder einstellbare Parameter aus einem virtuellen, nicht sichtbaren Bereich in den sichtbaren Bereich des Displays zu schieben mittels punktförmigen Berührung auf einer weiteren Schaltfläche, und dabei zumindest eine ursprünglich sichtbare Betriebsartenauswahl oder Parametereinstellung aus dem sichtbaren Bereich heraus zu verschieben. Damit können bei einer begrenzten Displayfläche bzw. Berührschirmfläche mehr Parameter oder Betriebsarten zur Auswahl bereitgestellt werden, als zu einem Zeitpunkt dargestellt werden können. Besonders bei Haushaltgeräten können nur recht kleine Berührschirme zum Einsatz kommen, da der Platz auf dem Blendenbereich häufig stark begrenzt ist. Ferner würde ein Berührschirm in einer beispielsweise 20 Zoll Monitorgröße an einem Herd, Backofen oder Waschmaschine etwas übertrieben groß und dadurch unübersichtlich wirken.

In einer anderen Ausführung ist der Mikrocontroller dazu eingerichtet, weitere, auswählbare Betriebsarten oder einstellbare Parameter aus einem virtuellen, nicht sichtbaren Bereich in den sichtbaren Bereich des Displays mittels einer überstreichenden Berührbewegung zu schieben, und dabei zumindest eine ursprünglich sichtbare Betriebsartenauswahl oder Parametereinstellung aus dem sichtbaren Bereich heraus zu verschieben. Somit kann auf die zusätzliche Schaltfläche für weitere Parameter oder Einstellungen verzichtet werden. Die Auswahl für die zusätzlichen Parameterwalzen erfolgt dadurch, dass ein überstreichen der Schaltflächen in eine Richtung entlang der virtuellen Achse erfolgt, wobei die einzelnen Werte durch überstreichen einer Walze in Richtung quer zur virtuellen Achse der Walze ausgewählt werden können.

Die Erfindung betrifft auch ein Haushaltgerät, umfassend eine Bedienvorrichtung wie vorstehend beschrieben, sowie Lastmittel, welche zur Durchführung eines Programms gemäß der von einem Benutzer vorgenommenen Einstellungen aktiviert und deaktiviert werden können.

Die Erfindung betrifft ferner ein Gargerät, wie beispielsweise Herd, Backofen oder Mikrowellenofen, umfassend eine Bedienvorrichtung wie vorstehend beschrieben, sowie zumindest ein Lastmittel, wie Gebläse, Heizeinrichtung und Mikrowellensender, welches zur Durchführung eines Programms, beispielsweise eines Garprogramms, aktiviert und deaktiviert werden kann.

Ein Ausführungsbeispiel der Erfindung ist in den Zeichnungen rein schematisch dargestellt und wird nachfolgend näher beschrieben. Es zeigen
- Fig. 1:: ein als Gargerät ausgebildetes Haushaltgerät in einer perspektivischen Frontansicht und
- Fig. 2a - 2i:: die als Berührschirm ausgebildete Bedieneinrichtung in verschiedenen Bedienungszuständen.

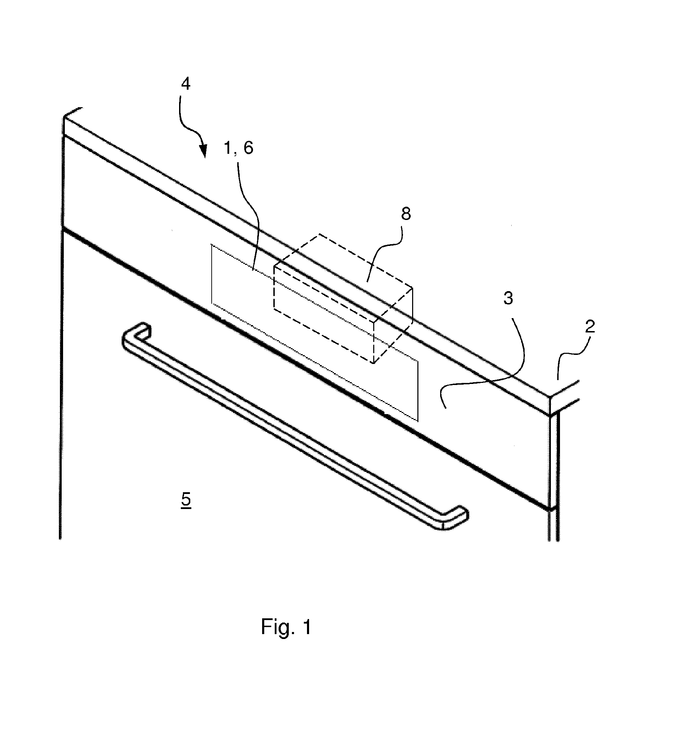

Fig. 1 zeigt ein Gargerät, hier beispielhaft einen Backofen 4, der ein Gehäuse 2 eine frontseitige Tür 5 für den innenliegenden Garraum und eine Blende 3 mit einer Bedieneinrichtung 1 umfasst. Die Bedienvorrichtung 1 umfasst eine Blende 3 bzw. zumindest einen Blendenbereich, der als Berührschirm 6 ausgebildet ist. Der Berührschirm 6 umfasst hierbei ein Display 7 und ein transparentes Sensorfeld 10, das zwischen Blende 3 und Display 7 angebracht ist und mit einem Mikrocontroller 9 zur Erfassung der Berührposition in Wirkverbindung steht. Das Display 7 wird ebenfalls von einem oder von dem Mikrocontroller 9 bzw. einer Steuereinrichtung 8 mit einem Mikrocontroller 9 angesteuert, um abhängig von der jeweils aktivierten Bedienungsmöglichkeit die entsprechenden Schaltflächen 11 auf dem Display 7 darzustellen. Die Steuereinrichtung 8 oder der Mikrocontroller 9 kann derart ausgelegt sein, dass sie auch die Lasten, die das Gargerät bzw. Haushaltgerät 2 umfasst, steuert, um einen Behandlungsprozess bzw. einen Garprozess durchzuführen. Der Mikrocontroller 9 steht dabei mit einem Speicher 9a in Verbindung, in dem bereits vordefinierte Programme gespeichert sind. In den Speicher können zumindest einige vordefinierte Programme verändert und überschrieben werden oder zusätzliche, individuell vom Benutzer definierte Programme abgespeichert werden.

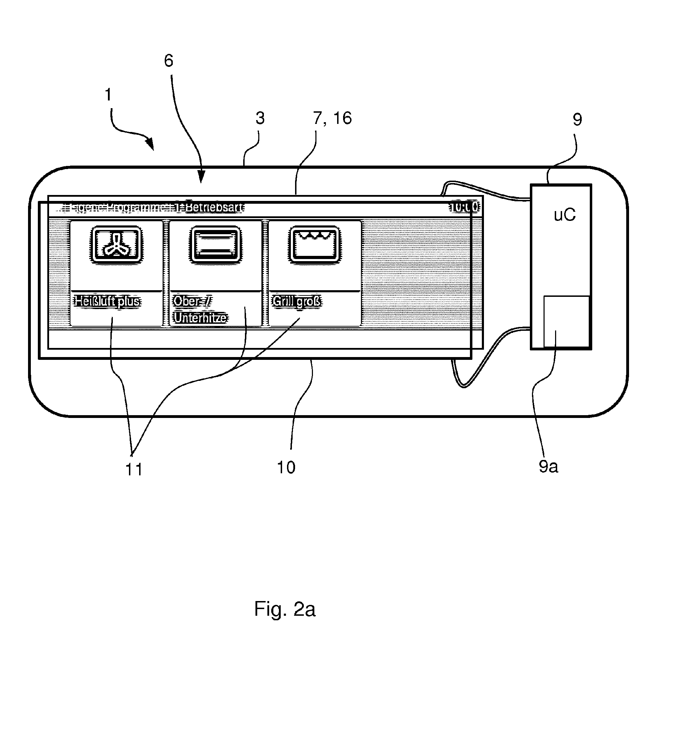

Gemäß Fig. 2a bis 2i ist beispielhaft der Berührschirm 6 mit der Darstellung für Bedienhandlungen für ein individuelles Programm dargestellt, das nach der Einstellung bzw. Konfiguration abgespeichert wird und dann zur erneuten Aktivierung wieder vom Benutzer aufgerufen werden kann. Fig. 2a zeigt dabei schematisch folgende Komponenten des Berührschirms 6, das Display 7, ein darüber angeordnetes, transparentes Sensorfeld 10 und den Mikrocontroller 9, der das Display 7 zur Anzeige von Schaltflächen 11 oder anderen Informationen steuert und ferner mit dem Sensorfeld 10 in Wirkverbindung steht zur Erfassung der Berührposition oder Berührbewegung bzw. Berührgeste auf der Blende 3.

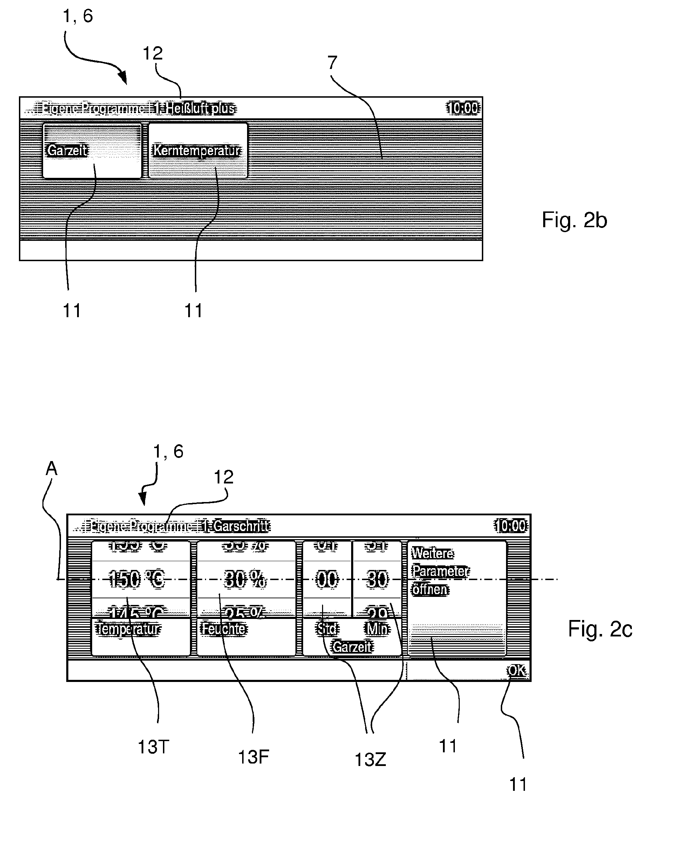

Fig. 2b zeigt den Berührschirm 6 in der Situation nach der Auswahl der Betriebsart "Heißluft Plus". Die Anzeige der gewählten Betriebsart bleibt in der Anzeige 7 in einem von den Schaltflächen 11 entfernten Bereich 12 erhalten. In der gezeigten Situation wird der Benutzer aufgefordert, weitere Betriebsarten bzw. Parametereinstellungen auszuwählen. In dem gezeigten Beispiel wird zur Auswahl mit einer Schaltfläche 11 die "Garzeit" und mit einer weiteren Schaltfläche 11 die "Kerntemperatur" angeboten. Nach der Auswahl der Betriebsart wird eine Auswahlmöglichkeit gemäß Fig. 2c bereitgestellt. Hierbei werden mehrere Parameter zur Einstellung durch eine Berührgeste angeboten. In der ersten Schaltfläche 13T sind Temperaturwerte in Form einer animierten Walze mit einer etwa horizontalen virtuellen Achse A dargestellt, die durch eine gleitende Berührbewegung quer zur virtuellen Achse in eine animierte Rotation versetzt wird, wodurch sich die angezeigten Temperaturwerte entsprechend einer vorgegebenen Reihenfolge erhöhen oder vermindern. Mit der animierten Walze 13F kann die Feuchte für den Garprozess entsprechend der obigen Beschreibung eingestellt werden. Für die Einstellung der Garzeit umfasst das Feld 13Z zwei animierte Walzen, eine zur Einstellung der Stunden und eine weitere zur Einstellung der Minuten. Mit der Schaltfläche 11, die mit "Weitere Parameter öffnen" bezeichnet ist, können weitere Parameter zur Veränderung oder Einstellung in den sichtbaren Bereich 16 (Fig. 2a) auf dem Berührschirm 6 angeboten werden. Mit der Schaltfläche 11, die mit "OK" bezeichnet ist, kann die Auswahl- bzw. Einstellungshandlung abgeschlossen werden, die ausgewählten Werte für die entsprechenden Parameter werden für die Durchführung des Garprozesses bzw. Behandlungsprozesses übernommen oder aktiviert.

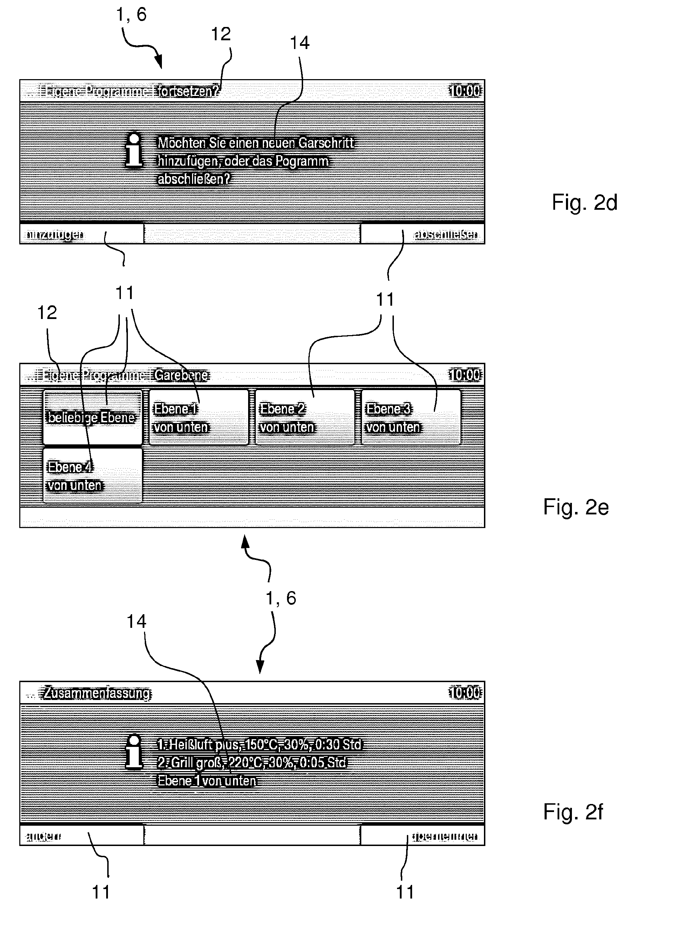

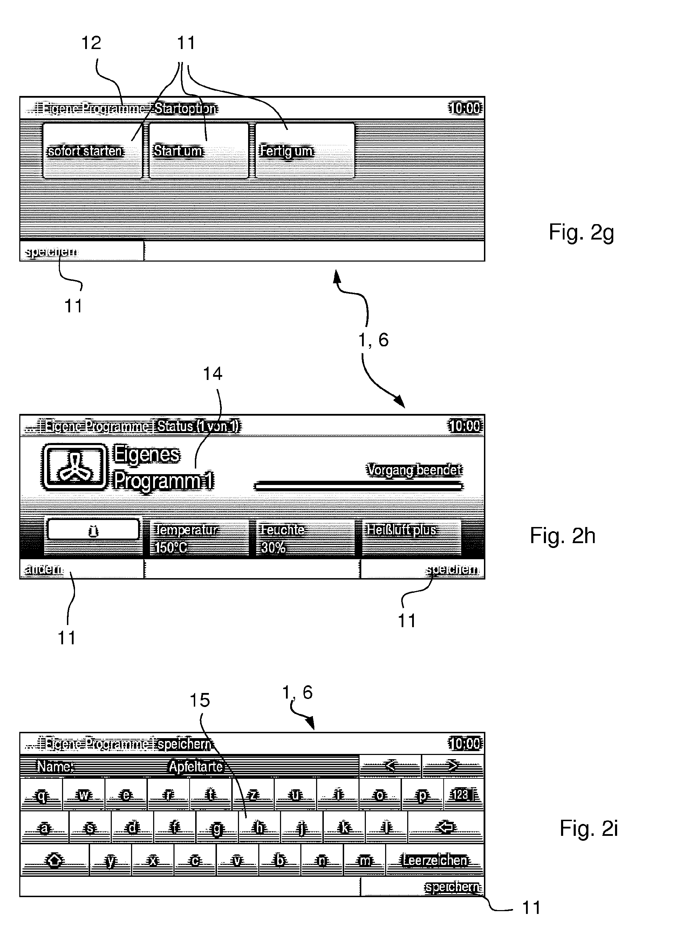

Fig. 2d zeigt den Berührschirm 6 nach der Einstellung gemäß Fig. 2c. Mittels eines Dialoges oder einer Textausgabe 14 wird der Benutzer aufgefordert, die Einstellung des Behandlungsprogrammes fortzusetzen oder zu beenden. In der dargestellten Situation wird die Einstellung des Behandlungsprogrammes beendet. Der Benutzer hat zu dieser Maßnahme zuvor die Schaltfläche 11 "Beenden" berührt. In der gezeigten Ausführung werden noch einige abschließende Einstellungen des Benutzers verlangt, die in Fig. 2e dargestellt sind. Die hier gezeigten Schaltflächen 11 sind zur Auswahl der verwendeten Ebene vorgesehen, in die der Gargutträger eingeschoben wird. Nach der Auswahl, in diesem Beispiel die Schaltfläche 11 "Ebene 1 von unten" erfolgt gemäß Fig. 2f eine Textausgabe 14 mit einer Zusammenfassung der vorabeingestellten Betriebsarten und Parameter. Wenn der Benutzer noch Änderungen vornehmen muss, kann er durch Berührung der Schaltfläche 11 "ändern" Änderungen vornehmen. Durch Berührung der Schaltfläche 11 "übernehmen" erfolgt eine Aufforderung zur Einstellung der Startoption, wie und wann das Garprogramm gestartet werden soll, wie es in Fig. 2g dargestellt ist. Nach dem Aktivieren der Schaltfläche 11 "speichern" wird das so definierte Programm nochmal in einer Übersichtsanzeige gemäß Fig. 2h angezeigt. Die Schaltfläche 11 "ändern" kann betätigt werden, um Änderungen in den bereits vorgenommen Einstellungen vorzunehmen. Beim oder nach dem Betätigen der Schaltfläche 11 "speichern" wird das durch die vorgenommen Einstellungen definierte Programm gespeichert. Um einen Programmnamen zu vergeben, wird gemäß Fig. 2i ein Tastaturfeld 15 auf dem Berührschirm 6 bereitgestellt, mittels dem der Benutzer einen frei gewählten Namen vergeben kann. Nach der Eingabe des Programmnamens mittels der Tastatur 15 kann durch Betätigung der Schaltfläche 11 "speichern" der Name zu der vorher gemachten Parametrierung gespeichert werden.

## Patentansprüche

1. Bedienvorrichtung (1) für ein Haushaltgerät (4), die eine als Berührschirm (6) ausgebildete Blende (3) umfasst, mit einem Display (7) und einem transparenten Sensorfeld (10), das in Wirkverbindung mit einem Mikrocontroller (9) steht zur Bestimmung einer Berührposition oder einer Berührbewegung auf der Blende (3) bzw. auf dem Berührschirm (6), wobei der Mikrocontroller (9) dazu eingerichtet ist, Betriebsarten, Programme und/oder Parameter als Schaltfläche (11,13T, 13F, 13Z) zur Auswahl durch Berührung der dargestellten Schaltfläche (11,13T, 13F, 13Z) anzuzeigen und die Anzeige zur Auswahl der Betriebsart oder von Parametern bereitzustellen zum Konfigurieren des Programmes im Haushaltgerät (4),
**dadurch gekennzeichnet,**
**dass** der Mikrocontroller (9) ferner dazu eingerichtet ist, zur Präsentation von einzustellenden Parametern oder Betriebsarten eine Ausgabe von mehr als einem Parameter oder Betriebsart zur Einstellung bzw. Auswahl gleichzeitig auf dem Display (7) bereitzustellen, wobei die Manipulation oder Einstellung des jeweiligen Parameters oder Betriebsart keiner vorgegebenen Reihenfolge unterworfen ist.

2. Bedienvorrichtung nach Anspruch 1,
**dadurch gekennzeichnet,**
**dass** der Mikrocontroller (9) dazu eingerichtet ist, die Anzeige der Betriebsarten, Programme und/oder Parameter als Schaltfläche (11) zur Auswahl durch Berührung sequentiell zur Auswahl der Betriebsart oder eines Parameters bereitzustellen, wobei die Übernahme der eingestellten Parameter durch Weiterschalten der sequentiellen Auswahl auf die nächste einzustellende Betriebsart erfolgt.

3. Bedienvorrichtung nach Anspruch 1 oder 2,
**dadurch gekennzeichnet,**
**dass** das konfigurierte Ablaufprogramm als individuelles Programm abspeicherbar und wieder aufrufbar ist.

4. Bedienvorrichtung nach Anspruch 3,
**dadurch gekennzeichnet,**
**dass** der Mikrocontroller (9) dazu eingerichtet ist, das individuelle Programm vor Beginn der Auswahl und Einstellung der Betriebsarten und Parameter als separate Schaltfläche (11) bereitzustellen.

5. Bedienvorrichtung nach Anspruch 3,
**dadurch gekennzeichnet,**
**dass** der Mikrocontroller (9) dazu eingerichtet ist ein bereits in einem Speicher (9a) vordefiniertes Automatikprogramm hinsichtlich seiner Betriebsarten und Parameter auf dem Display (7) anzuzeigen, derart, dass die Betriebsarten und/oder Parameter durch Bedienhandlungen verändert und abgespeichert werden können.

6. Bedienvorrichtung nach Anspruch 5,
**dadurch gekennzeichnet,**
**dass** der Mikrocontroller (9) dazu eingerichtet ist, das ursprüngliche vordefinierte Automatikprogramm nach der Veränderung zu überschreiben.

7. Bedienvorrichtung nach Anspruch 5,
**dadurch gekennzeichnet,**
**dass** der Mikrocontroller (9) dazu eingerichtet ist, das ursprüngliche vordefinierte Automatikprogramm nach der Veränderung unter einem neuem Namen abzuspeichern.

8. Bedienvorrichtung nach Anspruch 1 oder 2,
**dadurch gekennzeichnet,**
**dass** der Mikrocontroller (9) dazu eingerichtet ist, die Werte für einen Parameter oder verschiedene, auswählbare Betriebsarten als animierte Walzen (13T, 13F, 13Z) auf dem Display (7) darzustellen, die durch eine überstreichende Berührung in Richtung quer zu einer virtuellen Rotationsachse (A) der Walze (13T, 13F, 13Z) die Werte in der Form einer walzenförmigen Rotationsbewegung verändert.

9. Bedienvorrichtung nach Anspruch 1 oder 2,
**dadurch gekennzeichnet,**
**dass** der Mikrocontroller (9) dazu eingerichtet ist, weitere, auswählbare Betriebsarten oder einstellbare Parameter aus einem virtuellen, nicht sichtbaren Bereich in den sichtbaren Bereich (16) des Displays (7) zu schieben mittels punktförmigen Berührung auf einer weiteren Schaltfläche (11), und dabei zumindest eine ursprünglich sichtbare Betriebsartenauswahl oder Parametereinstellung aus dem sichtbaren Bereich heraus zu verschieben.

10. Bedienvorrichtung nach Anspruch 1 oder 2,
**dadurch gekennzeichnet,**
**dass** der Mikrocontroller (9) dazu eingerichtet ist, weitere, auswählbare Betriebsarten oder einstellbare Parameter aus einem virtuellen, nicht sichtbaren Bereich in den sichtbaren Bereich (16) des Displays (7) mittels einer überstreichenden Berührbewegung zu schieben, und dabei zumindest eine ursprünglich sichtbare Betriebsartenauswahl oder Parametereinstellung aus dem sichtbaren Bereich heraus zu verschieben.

11. Haushaltgerät (4), umfassend eine Bedienvorrichtung (1) nach einem der Ansprüche 1 bis 10, sowie Lastmittel, welche zur Durchführung eines Programms gemäß der vorgenommenen Einstellungen aktiviert und deaktiviert werden können.

12. Gargerät (4), wie beispielsweise Herd, Backofen oder Mikrowellenofen, umfassend eine Bedienvorrichtung (1) gemäß einem der Ansprüche 1 bis 10, sowie zumindest ein Lastmittel, wie Gebläse, Heizeinrichtung und Mikrowellensender, welches zur Durchführung eines Programms, beispielsweise eines Garprogramms, aktiviert und deaktiviert werden kann.
